Europäisches Patentamt

**European Patent Office**

**Office européen des brevets**

(11) Publication number: **0 001 541**
A1

# EUROPEAN PATENT APPLICATION

(21) Application number: **78850017.1**

(22) Date of filing: **10.10.78**

(51) Int. Cl.²: **F 16 L 1/04, H 02 G 9/02**

(30) Priority: **11.10.77 SE 7711403**

(43) Date of publication of application: **18.04.79 Bulletin 79/8**

(84) Designated Contracting States: **BE CH DE FR GB LU NL**

(71) Applicant: **Andersson, Nils Evald, Box 116, S-463 01 LILLA EDET (SE)**

(72) Inventor: **Andersson, Nils Evald, Box 116, S-463 01 LILLA EDET (SE)**

(74) Representative: **Holmqvist, Lars J.H. et al, Lars Holmqvist Patentbyra AB Box 4289, S-203 14 Malmö 4 (SE)**

(54) **A sinker weight for sea conduits.**

(57) A sinker weight for sea conduits, said weight being made from concrete or another material of high density in order to retain the conduit below the water surface against the sea bottom. The sinker weight (1), which is preferably cylindrical in shape, is made in one piece and provided with a through aperture (2) excentric in relation to the centre of gravity (5) of the weight (1) for receiving the aperture (2), and an entry passage (3) connecting the aperture (2) with the periphery of the weight (1) in order to introduce the conduit to the aperture (2). The passage (3) opens towards the aperture (2) laterally in relation to a plane including the centre axis of the aperture and the centre of gravity of the weight.

The passage (3) may comprise a restriction (4) immediately before the aperture (2). The aperture (2) may comprise a liner (6) of a resilient material. After the mounting operation the passage (3) may be filled with a filling material, such as a plastic.

ACTORUM AG

1

## A Sinker Weight for Sea Conduits

The present invention relates to a sinker weight of concrete which is adapted to be attached to sea conduits, pipes, cables or like in order to lower them below the water surface and retain them against the sea bottom.

It is previously known to attach a sinker weight of concrete or other material of high density to sea conduits and the like in order to weight them down below the water surface and retain them against the sea bottom. These previously known sinker weights usually consist of two pieces which are retained on either sides of the conduit, surrounding the same. The two pieces are locked in relation to each other and the conduit by means of bolts or other locking means.

The drawback of these prior art sinker weights is that they consist of several pieces which have to be assembled when they are attached to the conduit, thus entailing fitting problems at the mounting operation. If bolts are used there is the problem that these are attacked by rust and corrosion and are destroyed after a relatively short time.

The purpose of the present invention is to provide a sinker weight for a sea conduit, the sinker weight being made in one piece. The expression conduit used in the specification and claims designates sea lines, pipes, pipelines, cables and the like. Due to the fact that the sinker weight is integrally made it is possible to avoid the drawback that several parts have to be kept available and have to be fitted for assembling at the mounting operation.

Thus, the present invention provides a sinker weight of concrete for a conduit. The sinker weight is made in one piece and is provided with a through aperture excentric in relation to the centre of gravity of the weight and adapted to receive the conduit, and an entry passage connecting the aperture with the periphery of the weight in order to introduce the weight onto the conduit. The passage opens towards the aperture laterally in relation to a plane containing the symmetry axis of the aperture and the centre of gravity of the weight. Preferably, the passage opens towards the aperture via a restriction which is narrower than the diameter of the conduit and which is narrower than the diameter of the aperture. Preferably, the width of the passage is slightly greater than, and the diameter of the aperture is slightly smaller than, the diameter of the conduit.

In a preferred embodiment of the invention the passage opens towards the periphery of the weight from one side in relation to the above-mentioned plane and extends therefrom in a helical path and opens onto the aperture from the other side in relation to the said plane. Preferably, the weight is cylindrical and the passage and the aperture are bounded by walls parallel to the longitudinal axis of the cylinder. The passage may also have the same width as the diameter of the aperture, in which case the aperture is provided with a liner or lining of a resilient material.

Furthermore, the passage may be considerably narrower than the diameter of the conduit and the diameter of the aperture may be slightly greater than the width of the passage.

When the weight is to be attached to the conduit and when the conduit is to be laid out below the water surface, the weight is arranged in such a way that its centre of gravity will be located vertically below the conduit. Since the aperture is excentrically arranged in the weight, the distance between the conduit and the supporting surface of the weight against the sea bottom will be greater than the diameter of the weight, which is in advantage. Due to its weight the conduit tends to be pressed out from the aperture, said forces being essentially vertical. As the aperture opens towards the passage laterally at the normal position of the weight on the conduit the said pressing out risk will be reduced essentially completely.

The sinker weight is arranged on a conduit by introducing the conduit into the passage, the width of which may be slightly greater than

**0001541**

the diameter of the conduit. Thereupon, the conduit is allowed to pass through a restriction in the passage immediately before the passage opens towards the aperture. The diameter of the aperture is slightly less than the diameter of the conduit, whereby the sinker weight will to some extent be squeezed around the conduit. As a result of this, the weight is retained on the conduit without a risk that the weight will come loose.

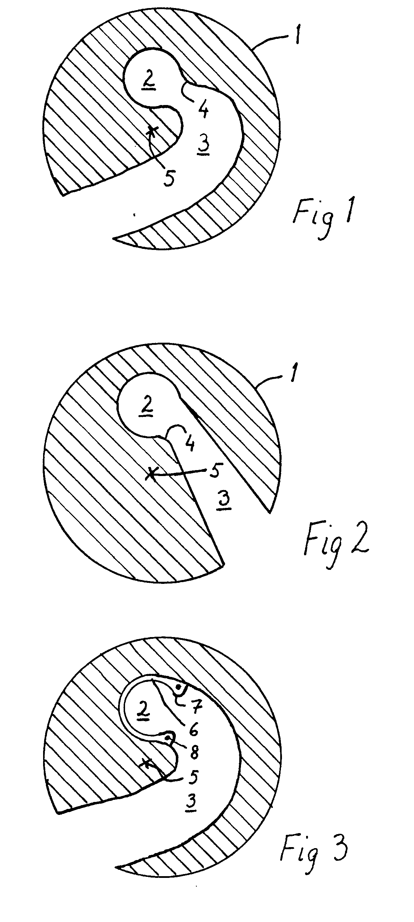

With reference to the accompanying drawings the invention will be described in more detail, Figs. 1-3 showing cross-sectional views of three embodiments of the invention.

Fig. 1 shows a sinker weight 1 in accordance with the present invention, which consists of concrete. The sinker weight is made in one piece and has preferably cylindrical shape. However, parallelepipedic or other shapes are also possible. The integral sinker weight is provided with a cylindrical aperture 2, the center of which is located at a distance from the centre of gravity 5 of the sinker weight. Furthermore, the sinker weight is provided with a passage 3 connecting the excentric aperture 2 with the periphery of the sinker weight. A restriction 4 is arranged in the communication between the aperture and the passage. The aperture has a diameter which is slightly less than the diameter of the conduit, and the width of the restriction is slightly less than the diameter of the aperture, and the width of the passage is slightly greater than the diameter of the conduit. The walls of the passage and of the aperture are parallel to the axis of the cylinder.

The passage opens towards the aperture from one side in relation to a plane including the centre axis of the aperture and the centre of gravity of the weights. Furthermore, the passage opens towards the periphery of the weight from the other side in relation to said plane, and the passage forms a helical path. If the opening of the passage towards the aperture faces downwardly there is a risk that the conduit will be pressed out of the aperture and the concrete weight will loose if the weight happens

4    0001541

to rest on a rise of the sea bottom, the weight of the conduit pressing the conduit downward in relation to the weight. As a rule there is no lateral force, and consequently the risk that the weight will come loose is very small in the embodiment described above.

Since the passage is helical the risk that the weight will come loose from the conduit is reduced still more.

The sinker weight is attached to the conduit by introducing the conduit into the passage 3.up to the restriction 4. Thereupon a compressing tool is applied to the conduit, compressing the conduit so that it can pass the restriction 4 and be introduced into the aperture 2. Thereupon, the compression is removed and the conduit expands in the aperture 2. The conduit presses against the wall of the aperture, whereby the sinker weight is locked to the conduit.

Fig. 2 shows another embodiment of the invention. In this case the passage 3 is shorter and almost straight and opens towards the periphery of the weight at the same side of the said plane as the passage 3 opens towards the aperture 4. However, there is no restriction in this embodiment. Instead, the walls of the passage converge in such a way that the width at the periphery of the weight is slightly greater than the diameter of the conduit and the width at the aperture is slightly less than the diameter of the conduit and also slightly less than the diameter of the aperture. Alternatively, the width of the passage may be equally large throughout the length of the passage. Furthermore, the diameter of the aperture may be equal to the width of the passage. The opening of the passage towards the periphery of the weight may also be provided with the restriction in order to reduce the risk that the weight may come loose from the conduit.

In the embodiment according to Fig. 3 the sinker weight is provided with a helical passage as shown in Fig. 1. However, there is no restriction and the aperture constitutes the end of the passage and has the same

5 0001541

diameter as the width of the passage. The aperture is coated inside with an elastic plastic material 6 or with a liner which extends some distance out into the passage and is provided with a bead 7. The liner functions as a grip for the conduit and the bead forms the restriction, preventing the sinker weight coming loose from the conduit. Possibly, the bead may be reinforced with reinforcing means 8 of metal or another rigid material, as shown in Fig. 3. The liner is attached to the sinker weight by means of welding, gluing or in another suitable manner.

After the weight has been attached to the conduit the passage may be filled with a mass or another kind of filling material of a suitable type, such as a plastic material, a plastic foam or the like.

A person skilled in the art realize that the sinker weight according to the present invention may be modified and changed without deviating from the inventive idea and the purpose is that these modifications should be included within the scope of the invention. Thus, the characteristics according to the above embodiments may be combined in suitable manners. Furthermore, the shape of the sinker weight may be for instance a right-angled body. The passage may extent in another path than those described above, which may for instance also imply a curvature or a helical movement in planes which are not parallel to the longitudinal axis of the sinker weight. The invention is merely limited by the appended claims.

What I claim is:

1. A sinker weight of concrete for a conduit, which is made in one piece and provided with a through aperture which is excentric in relation to the centre of gravity of the weight for receiving the conduit and an entry passage connecting the aperture with the periphery of the weight in order to introduce the weight onto the conduit, the passage opening towards the aperture laterally in relation to a plane including the centre axis of the aperture and the centre of gravity of the weight.

2. A sinker weight as claimed in claim 1, wherein the diameter of the aperture is slightly less than the diameter of the conduit.

3. A sinker weight as claimed in claim 1 or 2, wherein the passage opens towards the aperture via a restriction which is narrower than the diameter of the conduit and which is narrower than the diameter of the aperture.

4. A sinker weight as claimed in any one of the preceding claims, wherein the width of the passage is slightly greater than the diameter of the conduit.

5. A sinker weight as claimed in any one of claims 1-3, wherein the width of the passage is less than the diameter of the conduit and less than the diameter of the aperture.

6. A sinker weight as claimed in any one of the preceding claims, wherein the passage opens towards the periphery of the weight from one side in relation to said plane and extends therefrom in a helical path and opens towards the aperture from the other side in relation to said plane.

7. A sinker weight as claimed in any one of the preceding claims, wherein the weight is cylindrical and the passage and the aperture are bounded by walls which are parallel to the longitudinal axis of the cylinder.

2

0001541

8. A sinker weight as claimed in claim 1, wherein the passage has the same width as the diameter of the aperture and wherein the aperture is provided with a liner of a resilient material.

Fig 1

Fig 2

Fig 3

European Patent Office

| | DOCUMENTS CONSIDERED TO BE RELEVANT | | CLASSIFICATION OF THE APPLICATION (Int. Cl.²) |
|---|---|---|---|
| Category | Citation of document with indication, where appropriate, of relevant passages | Relevant to claim | |
| – | DE – A – 2 333 653 (NABALCO) <br> * fig. 10 * | 1 | F 16 L 1/04 <br> H 02 G 9/02 |
| – | DE– U – 7 010 184 (F.T. PRODUCTS) <br> * fig. 1, 4 * | 3,5 | |
| A | DE – B – 2 201 195 (FELTEN AND GUILLEAUME) | | **TECHNICAL FIELDS SEARCHED (Int.Cl.²)** |
| A | DE – U – 1 903 813 (U. GRAJECKI) | | D 07 B 1/20 <br> F 16 G 11/02 <br> F 16 L 1/00 <br> F 16 L 1/04 <br> F 16 L 3/08 |
| A | AT – B – 336 358 (LILLA EDETS CEMENTGJUTERI) | | F 16 L 11/12 <br> F 16 L 55/00 <br> H 02 G 9/02 <br> H 02 G 9/12 |
| A | GB – A – 1 039 251 (SHELL) | | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims | |
|---|---|---|
| Place of search | Date of completion of the search | Examiner |
| Berlin | 18-12-1978 | SCHLABBACH |

EPO Form 1503.1  06.78